# EUROPÄISCHE PATENTANMELDUNG

(11) **EP 3 988 195 A1**
(43) Veröffentlichungstag der Anmeldung: **27.04.2022**
(21) Anmeldenummer: 21203068.8
(22) Anmeldetag: 18.10.2021
(51) Int. Cl.: B01D 19/00, B04C 3/04, B04C 3/06, F15B 21/044

(54) **MASSENABSCHEIDER FÜR GAS AUS HYDRAULISCHEM DRUCKMITTEL UND MASSENABSCHEIDER-ANORDNUNG**

(30) Priorität: 22.10.2020 DE 102020213316
(71) Anmelder: Robert Bosch GmbH, 70442 Stuttgart (DE)
(72) Erfinder: Perschall, Markus, 63739 Aschaffenburg (DE)

(57) **Zusammenfassung**

Offenbart ist ein Massenabscheider zum Abscheiden von Blasen aus öligem oder organischem, hydraulischem Druckmittel, mit einem von einem Druckmittelzulauf in Richtung von Abläufen des Masseabscheiders ausbildbaren Druckmittelströmungspfad, der von einer radial außen angeordneten Mantelfläche gekrümmt ist.

Offenbart ist zudem eine Massenabscheider-Anordnung.

## Beschreibung

Die Erfindung betrifft einen Massenabscheider gemäß dem Oberbegriff des Anspruchs 1, sowie eine Massenabscheider-Anordnung gemäß Anspruch 15.

Hydraulische Anlagen und Aggregate führen organisches oder ölhaltiges Druckmittel, dessen Eigenschaften von mitgetragenen, freien Gas- oder Luftblasen beeinflusst wird, was ein Problem für das Betriebsverhalten und die Lebensdauer von Komponenten darstellt. Daher müssen die Luftblasen fortwährend entfernt werden.

Verbreitet ist, eine Abscheidung der Blasen in einem Behälter oder -Tank zu realisieren, wobei die Entgasung darin in Abhängigkeit der Verweilzeit des Druckmittels erfolgt. Diese kann über eine geschickte Strömungsführung beeinflusst werden. Damit nachteilig verbunden ist, dass solche Behälter oder Tanks einen großen Bauraum beanspruchen.

Alternativ oder ergänzend sind Ultraschalllösungen bekannt, die Blasenwachstum fördern, so die Abscheidung effizienter gestalten und somit kleinere Behälter oder - Tanks ermöglichen. Diese Lösungen sind energieintensiv und benötigen einen eigenen Antrieb oder eine eigene Energieversorgung.

Um diese Situation zu verbessern, sind Lösungen bekannt, bei denen Zyklone Anwendung finden. So zeigt beispielsweise die Druckschrift US 2017 029 89 65 A1 einen Tank mit integriertem Zyklon, der Blasen vom Druckmittel abscheidet und so kleinere Behälter oder Tanks ermöglicht. Eine ähnliche Lösung mit einem Zyklon in einem Hydrauliktank zeigt die Offenlegungsschrift DE 103 23 068 A1.

Einen Zyklon zur Abscheidung von Blasen aus Öl mit einer Innenmantelfläche mit variablem Radius zeigt die Druckschrift US 2015 007 53 83 A1.

Einen Zyklon, mittels dem die Abscheidung in Abhängigkeit von bestimmten Betriebszuständen der Komponente erfolgen kann, zeigt die Druckschrift US 2014 008 32 90 A1. Dabei ist die Entgasung derart gesteuert, dass in einer kritischen Nutzungsperiode keine Entgasung erfolgt.

Fortwährende Aufgabe des Fachmannes ist, die Flexibilität der Abscheidung, insbesondere auch sehr kleiner Blasen, zu erhöhen und den, insbesondere in Fahrzeugen oder mobilen Arbeitsmaschinen, vom Tank oder Behälter beanspruchten Bauraum zu minimieren.

Dem gegenüber liegt der Erfindung die Aufgabe zu Grunde, einen Massenabscheider mit effizienterer Abscheidung von Gas aus öligem oder organischem, hydraulischem Druckmittel zu schaffen. Zudem liegt der Erfindung die Aufgabe zu Grunde, einen Massenabscheider mit hoher Effizienz und Flexibilität der Abscheidung von Gas aus dem Druckmittel zu schaffen.

Diese Aufgaben werden gelöst durch einen Massenabscheider mit den Merkmalen des Anspruchs 1 und durch eine Massenabscheider-Anordnung mit den Merkmalen des Anspruchs 15.

Vorteilhafte Weiterbildungen der Erfindungen sind in den jeweils abhängigen Ansprüchen beschrieben.

Ein Massenabscheider oder Zyklon ist zum Abscheiden von Blasen aus öligem oder organischem, hydraulischem Druckmittel vorgesehen. Das Druckmittel tritt dazu über wenigstens einen Druckmittelzulauf in einen Innenraum des Massenabscheiders ein und strömt entlang einem von einer radial außen angeordneten Mantelfläche gekrümmten Druckmittelströmungspfad Abläufen zu. Der Druckmittelströmungspfad ist aufgrund der Krümmung insbesondere rotationsdominant ausgebildet. Einer der Abläufe ist für die Blasen, das Gas oder eine gegenüber dem Druckmittel am Druckmittelzulauf zumindest gashaltigere Phase und ein anderer der Abläufe für das zumindest teilentgaste Druckmittel vorgesehen. Erfindungsgemäß ist eine radial innen angeordnete Mantelfläche vorgesehen, sodass sich der Druckmittelströmungspfad zumindest abschnittsweise zwischen den Mantelflächen erstreckt.

Aufgrund der zusätzlichen, radial inneren Mantelfläche ist dort eine Ringspaltströmung mit vergleichsweise höherer Strömungsgeschwindigkeit als in einer reinen Wirbelströmung ohne innere Mantelfläche ausbildbar. Daraus resultieren sowohl stärkere turbulente Fluktuationen als auch Scherungen mit Geschwindigkeitsunterschieden in radialer Richtung, die die Kollisionswahrscheinlichkeit - unter anderem aufgrund von Überholvorgängen der Blasen - und damit die Wahrscheinlichkeit der Koaleszenz von kleinen, insbesondere sehr kleinen, zu großen Blasen erhöhen. Dadurch vergrößert sich das Volumen und der Durchmesser einzelner Blasen, wodurch sich wiederum eine Abscheidegeschwindigkeit und so auch der Abscheidegrad des Massenabscheiders erhöht. Der Massenabscheider kann so bei gleicher Abscheidungsrate einen geringeren Bauraum beanspruchen, also effizienter arbeiten.

Insbesondere sind die Mantelflächen zumindest abschnittsweise konzentrisch oder koaxial zueinander oder parallel ausgebildet.

In einer Weiterbildung ist der Massenabscheider derart ausgelegt, dass die Abscheidung optimiert ist. Hierzu sind die Mantelflächen in Abhängigkeit eines Nenn-Druckmittelvolumenstroms und eines Nenn-Blasendurchmessers geometrisch derart ausgestaltet, dass eine Zentripetalkraft der Blase mit einer Widerstandskraft der Blase im Gleichgewicht ist und eine Abscheidegeschwindigkeit der Blase in radialer Richtung groß genug ist, um während einer Blasenlaufzeit im Massenabscheider einen Abstand von der radial außen zur radial innen angeordneten Mantelfläche zurückzulegen.

In die Ausgestaltung gehen zumindest der Durchmesser der radial äußeren Mantelfläche, die Höhe oder axiale Erstreckung des Massenabscheiders, insbesondere eine axiale Überdeckung der beiden Mantelflächen, und der Abstand - oder eine Auswahl der genannten - in Abhängigkeit des Nenn-Druckmittelvolumenstroms und des Nenn-Blasendurchmessers ein. Die Widerstandskraft geht vorzugsweise als Funktion des Nenn-Blasendurchmessers und der Abscheidegeschwindigkeit ein.

Ergänzend oder alternativ geht in die Ausgestaltung ein Querschnitt des Druckmittelzulaufs ein.

Um die Koaleszenz, das Blasenwachstum und so die Effizienz weiter zu steigern, ist in einer Weiterbildung wenigstens eine der Mantelflächen und/oder eine zulauf- oder ablaufseitige Oberfläche, zumindest abschnittsweise derart mikro- oder nanoskalig strukturiert, dass daran eine Benetzung mit Gas gegenüber einer Benetzung mit dem Druckmittel erhöht ist.

Ausschlaggebend für die Benetzung ist unter anderem der Kontaktwinkel zwischen dem Druckmittel und der jeweiligen Mantel- oder Oberfläche. Im Normalfall weist Öl sehr kleine Kontaktwinkel von beispielsweise <30° gegenüber technischen Flächen wie Stahl auf, was zu einer starken Benetzung mit Öl führt. Mittels der Funktionalisierung mittels mikro- oder nanoskaliger Strukturen, die insbesondere mit einer Re-entrant Struktur ausgebildet ist, ist eine Funktionalisierung der betreffenden Fläche möglich, die zu Kontaktwinkel bis zu 120° oder mehr führt. Daraus ergibt sich im Druckmittel eine noch stärkere Benetzung der so ausgestalteten Ober- oder Mantelfläche mit Blasen als mit Druckmittel. Das heißt Blasen, die infolge der Abscheidung in Kontakt mit dieser Ober- oder Mantelfläche kommen, benetzen diese, aggregieren und koaleszieren dort.

Über eine Weiterbildung mit einer zusätzlichen Oberflächenchemie, beispielsweise mit einer Fluorisierung, können - insbesondere bei gegebener Mikro- oder Nanostrukturierung, - besonders große Kontaktwinkel größer als 120° zum Druckmittel erzielt werden.

Die funktionalisierte Oberfläche kann insbesondere an einem durchlässigen, beispielsweise sieb-, gewirk-, gewebe-, filter- oder gitterartigen, insbesondere lösbar angeordneten, Einsatz im Massenabscheider ausgebildet sein. Eine vorteilhafte Ausbildung ist, wenn der Einsatz in einem Zuströmbereich des für die Blasen vorgesehenen Ablaufs, also zwischen dem Druckmittelzulauf und dem genannten Ablauf, angeordnet ist.

Um die Effizienz weiter zu erhöhen, sind in einer Weiterbildung gezielt bestimmte Flächen mit der oben genannten Funktionalisierung versehen und andere nicht. So sind unterschiedliche Kombinationen von oleophilen, beziehungsweise aerophoben, mit aerophilen, beziehungsweise oleophoben, Flächen denkbar. So kann insbesondere das Geschwindigkeitsprofil und somit die bereits erwähnte Scherung beeinflusst werden.

Beispielsweise ist in einer bevorzugten Weiterbildung die radial innen angeordnete Mantelfläche auf genannte Art mikro- oder nanoskalig strukturiert und/oder mit Oberflächenchemie versehen, wohingegen die radial außen angeordnete Mantelfläche dies nicht ist. Letztgenannte ist somit vergleichsweise aerophob, beziehungsweise oleophil. Die radial innere Mantelfläche, zu der hin die Blasen ohnehin aufgrund der auf Blasen und Druckmittel wirkenden, unterschiedlich großen Zentripetalkraft streben, ist somit aerophil funktionalisiert. Durch das Zusammenwirken der unterschiedlichen Zentripetalkräfte mit dieser Aerophilie werden die Blasen somit stärker in Richtung der radial inneren Mantelfläche getrieben, als ohne die genannte Funktionalisierung. Dort werden sie aufgrund der erhöhten Benetzungsfähigkeit "gefangen". Dadurch erhöht sich zusätzlich die Abscheiderate der Blasen. Die radial äußere Mantelfläche, die nicht derart funktionalisiert, also vergleichsweise oleophil ist, weist somit für das Druckmittel eine Haftbedingung anstatt eines Luftpolsters auf. Da eine aerophil funktionalisierte Mantelfläche mit Luftpolster den Strömungswiderstand senkt, ist davon auszugehen, dass im entgegengesetzten Fall (Oleophilie) in Kombination mit der aerophilen radial inneren Mantelfläche ein verstärkter Geschwindigkeitsgradient in radialer Richtung entsteht. Dieser fördert wie erwähnt die Kollision von Blasen und erhöht zusätzlich die vorteilhafte, sogenannte Saffmann-Kraft auf die Blasen in Richtung Radiusursprung.

In einer Weiterbildung ist wenigstens einer der so funktionalisierten Ober- oder Mantelflächen zumindest abschnittsweise derart makroskalig strukturiert, dass daran die Blasen sammel- und/oder koaleszierbar sind. Eine Möglichkeit hierzu stellen makroskalige, sich insbesondere senkrecht, schräg oder parallel zum Druckmittelströmungspfad erstreckende, insbesondere spiralförmige Rillen oder Kanäle an der radial inneren Mantelfläche dar. Diese sind vorzugsweise derart groß, dass die Blasen darin eintauchen und dort aufgrund der engeren Führung mit höherer Wahrscheinlichkeit kollidieren können.

Die Effizienz der Abscheidung ist weiter erhöhbar mittels einer Weiterbildung bei der auf solche Weise mikro-, nano- und/oder makroskalig strukturierte Flächenabschnitte mit in solcher Weise unstrukturierten Flächenabschnitten abwechseln. So kann beispielsweise eine streifenförmige oder anders geartete Musterung von den abwechselnden Flächenabschnitten gebildet sein. So entsteht ein Wechsel von Flächenabschnitten, die aerophil funktionalisiert/oleophob sind mit Flächenabschnitten, die oleophil/aerophob sind. Das ist vorteilhaft für ein abwechselndes Ansammeln und Abschwemmen von Blasen und kann den Abscheidegrad erhöhen.

In einer Weiterbildung ist wenigstens eine der Mantelflächen um die andere rotierbar ausgebildet. Auch auf diese Weise kann der Geschwindigkeitsgradient in radialer Richtung beeinflusst werden, um die genannte Scherung und Kollision mit den damit verbundenen Vorteilen zu erhöhen. Die Rotation kann dabei passiv, also strömungsinduziert, oder aktiv angetrieben sein, beispielsweise mittels einem Hilfsantrieb.

In einer Weiterbildung erstrecken sich die Mantelflächen um eine Mittelachse, wobei der Druckmittelzulauf an einem in Richtung der Längsachse angeordneten Endabschnitt des Massenabscheiders angeordnet ist.

Vorzugsweise ist der Massenabscheider mit seiner Mittelachse in Schwerkraftrichtung ausgerichtet, wobei der Druckmittelzulauf vorzugsweise oben angeordnet ist.

Der Druckmittelzulauf kann tangential zu einer der Mantelflächen und gegen die Mittelachse angestellt münden. Alternativ kann er mittig zwischen die Mantelflächen münden.

Der eine Ablauf für die Blasen, das Gas oder die gashaltigere Phase ist vorzugsweise koaxial zur Mittelachse, der andere Ablauf für das zumindest teilentgaste Druckmittel oder die weniger gashaltige Phase ist tangential zu der oder den Mantelflächen und quer zur Mittelachse oder koaxial, insbesondere als Mittelkanal oder Ringkanal, ausgebildet.

In einer Weiterbildung ist der eine der Abläufe am einen, insbesondere oberen, Endabschnitt des Massenabscheiders und der andere der Abläufe am anderen, insbesondere unteren, Endabschnitt des Massenabscheiders angeordnet. Alternativ sind beide Abläufe an dem anderen, insbesondere unteren, Endabschnitt angeordnet.

Über die verschiedene Anordnung der Abläufe mit Bezug zur Schwerkraft oder Endabschnitt kann einerseits Rand- und Einbaubedingungen Rechnung getragen werden und andererseits kann die Abscheidung optimiert werden.

In einer Weiterbildung ist der eine der Abläufe, also derjenige für die Blasen, das Gas oder die zumindest gashaltigere Phase vorgesehene, von einem Tauchrohr gebildet, an dem außenumfänglich die radial innen angeordnete Mantelfläche, oder zumindest ein Abschnitt davon, ausgebildet ist.

Alternativ oder ergänzend ist in einer Weiterbildung ein vom Druckmittel benetzbarer Tauchkörper im Massenabscheider vorgesehen, an dem außenumfänglich die radial innen angeordnete Mantelfläche, oder zumindest ein Abschnitt davon, ausgebildet ist. Insbesondere weist der Tauchkörper aus Gründen der Strömungsführung und/oderoptimierung einen sich verjüngenden, insbesondere konischen oder kegelförmigen Abschnitt auf, der in den Innenraum des Massenabscheiders ragt.

Tauchrohr und Tauchkörper sind in einer Weiterbildung einander gegenüber angeordnet.

In einer Weiterbildung ist von den Mantelflächen, oder zumindest von Abschnitten der Mantelflächen, ein Strömungsquerschnitt verstellbar begrenzt. Über eine Verstellung der Mantelflächen, insbesondere ihrer axialen oder umfänglichen Position bezüglich der Mittelachse, kann so bei gegebenem und/oder variablem Druckmittelvolumenstrom die Strömungsgeschwindigkeit und deren Profil angepasst werden, um die Turbulenz, Scherung und sonstige, die Abscheidung beeinflussende, geschwindigkeitsabhängige Faktoren zur Verbesserung der Abscheidung zu beeinflussen.

Bei reduziertem Druckmittelvolumenstrom kann beispielsweise durch Verstellung der Mantelflächen eine Reduzierung des Strömungsquerschnitts erfolgen, um die Strömungsgeschwindikeit mit den genannten Effekten des Blasenwachstums zu erhöhen. Die Verstellung kann elektrisch oder hydraulisch gesteuert oder geregelt ausgebildet sein. Insbesondere kann eine hydraulische Regelung mittels einem Stromregelventil mit Druckwaage, über ein Druckregelventil, ein Druckreduzierventil oder über einen aus dem Druckmittelzulauf gemeldeten Druck druckgesteuert erfolgen.

Insbesondere ist eine Ausbildung vorteilhaft, bei der am Tauchkörper zumindest der Abschnitt der radial innen angeordneten Mantelfläche vorgesehen ist, wobei diese und die radial außen angeordnete Mantelfläche Abschnitte mit sich axial änderndem, Durchmesser, insbesondere kegel- oder konusförmige Abschnitte, aufweisen, zwischen denen der Strömmungsquerschnitt ausgebildet ist, wobei der Tauchkörper und/oder die radial außen angeordnete Mantelfläche axial verstellbar ist.

In einer Weiterbildung ist von den Mantelflächen, oder zumindest von Abschnitten der Mantelflächen, ein Zulaufquerschnitt verstellbar begrenzt. In einer Ausprägung ist hierzu der Zulaufquerschnitt auf in Verstellrichtung aufeinanderfolgende Zulaufmündungen des Druckmittelzulaufs in der radial außen angeordneten Mantelfläche verteilt. Die radial innen angeordnete Mantelfläche ist relativverstellbar zur fest angeordneten, radial äußeren Mantelfläche ausgestaltet, oder umgekehrt. Die radial innen angeordnete Mantelfläche hat eine Steuerkante, von der wenigstens eine der Zulaufmündungen über die Verstellung zumindest abschnittsweise zu- und/oder aufsteuerbar ist. Insbesondere ist die radial innere Mantelfläche oder zumindest ein Abschnitt davon an einem in Verstellrichtung betätigbaren Schieber ausgebildet.

Die Verstellung ist linear, insbesondere axial, oder sie ist rotatorisch, insbesondere umfänglich. Insbesondere in letztgenanntem Fall ist wenigstens eine der Mantelflächen lediglich abschnittsweise rotationssymmetrisch ausgebildet. Bezogen auf eine Verstellachse, insbesondere eine Mittelachse des Massenabscheiders, sind die Zulaufmündungen bei axialer Verstellung auf unterschiedlichen Radien angeordnet, bei rotatorischer Verstellung auf unterschiedlichen Umfangswinkeln.

Um die Güte der Abscheidung auch unter variablen Betriebsbedingungen aufrechterhalten zu können, ist eine Massenabscheider-Anordnung vorgesehen, die wenigstens zwei fluidisch verbindbare Massenabscheider, die gemäß wenigstens einem der vorhergehenden Aspekte ausgestaltet sind, aufweist.

Dabei sind in einer Weiterbildung die Massenabscheider fluidisch parallel oder in Reihe schaltbar vorgesehen. In einer Variante ist dies realisiert, indem zumindest ihre Druckmittelzuläufe fluidisch parallel schaltbar sind. Alternativ kann eine Reihenschaltung der Massenabscheider vorgesehen sein, indem ein Ablauf eines stromaufwärtigen Massenabscheiders mit einem Druckmittelzulauf eines dazu stromabwärtigen Massenabscheiders fluidisch verbindbar ist.

Besonders sparsam ist ein Bauraumbedarf einer Weiterbildung der Anordnung, bei der die Massenabscheider ineinander verschachtelt angeordnet sind.

Hierfür bietet sich eine Weiterbildung mit Massenabscheidern mit Tauchkörper an, der lediglich außenseitig die Funktion der Strömungsbeeinflussung aufweist. Sein Innenraum ist funktionslos und kann folglich für die Anordnung der Mantelflächen des nächstkleineren Massenabscheiders genutzt werden. Hierzu sind im Tauchkörper eines der Massenabscheider zumindest die Mantelflächen eines nächstkleineren der Massenabscheider angeordnet. Dessen Tauchkörper beinhaltet wiederum die Mantelflächen des nächstkleineren der Massenabscheider, und so weiter.

In einer Weiterbildung ist der Tauchkörper, in dem zumindest die Mantelflächen des nächstkleineren der Massenabscheider angeordnet sind, verstellbar angeordnet, sodass über seine Verstellung - insbesondere in Analogie zum oben genannten Ausführungsbeispiel mit Schieber - ein Zulaufquerschnitt und/oder ein Strömungsquerschnitt verstellbar ist oder sind.

Eine Aktivierung oder Deaktivierung wenigstens einer der Massenabscheider ist in einer Weiterbildung in Abhängigkeit eines Druckverlustes über den oder die Massenabscheider oder eines Druckmittelvolumenstromes steuerbar. Unter Aktivierung ist dabei zu verstehen, dass der oder die betreffenden Massenabscheider der Anordnung an der Abscheidung beteilgt sind, also tatsächlich einen Druckmittelvolumenstrom aufweisen.

Die vorgenannte Verstellung oder Aktivierung/Deaktivierung kann in einer Weiterbildung in Abhängigkeit von erfassten Eigenschaften des Druckmittels, beispielsweise der Viskosität, Temperatur, der Blasengröße oder dergleichen erfolgen.

In einer Weiterbildung, insbesondere in Parallelschaltung, sind die Massenabscheider mit ihren Druckmittelzuläufen an einen Stromteiler angeschlossen.

Die Aktivierung oder Deaktivierung kann in Abhängigkeit eines oder mehrerer Nenn-Druckmittelvolumenströme oder von deren Summen erfolgen, insbesondere über ein mittels einem Strömungsschalter betätigten Wegeventil oder eine andere Ventileinrichtung.

Die Anordnung hat in einer Weiterbildung eine Größenverteilung der Nenn-Druckmittelvolumenströme. In einer Weiterbildung sind die Massenabscheider der Anordnung selektiv aktivierbar, derart, dass ein konkret auftretender Druckmittelvolumenstrom durch die selektive Aktivierung und der sich daraus ergebenden Summe der Nenn-Druckmittelvolumenströme abgebildet werden kann.

Besonders bevorzugt ist der Massenabscheider und/oder die Anordnung der vorangegangenen Beschreibung derart ausgestaltet, dass die Abscheidung allein mittels der hydrostatischen und/oder kinetischen Energie der Druckmittelströmung, also ohne Hilfsenergie oder Hilfsantrieb, erfolgt. Ausgenommen sind hierbei gegebenenfalls Hilfsenergien oder Hilfsantriebe für die oben genannten Verstellungen. Aber auch diese Verstellungen können, wie beispielsweise bei Verwendung von hydraulisch betätigter Druckwaage, Druckregel-, Druckreduzierventil oder dergleichen, allein aus der hydrostatischen und/oder kinetischen Energie der Druckmittelströmung heraus mit Verstellenergie versorgt sein.

Insbesondere ist der Druckmittelvolumenstrom der eines Rücklaufs einer hydraulischen Komponente oder eines hydraulischen Aggregates. Insbesondere ist der Massenabscheider oder die Anordnung fluidisch im Rücklauf eingebunden.

Der Massenabscheider oder die Anordnung kann in einer Weiterbildung innerhalb eines Behälters oder Tanks angeordnet sein, um noch mehr Bauraum zu sparen.

Insbesondere sind hydraulische bestehende Komponenten, Aggregate oder Anlagen auf einfache Weise mit dem Massenabscheider oder der Anordnung nachrüstbar, wenn die Ausführung der Anordnung im druckarmen Rücklauf gewählt ist.

Im Folgenden werden Ausführungsbeispiele eines erfindungsgemäßen Massenabscheiders und einer erfindungsgemäßen Massenabscheider-Anordnung in Zeichnungen näher erläutert. Es zeigen:
Figur 1a bis 1e Ausführungsbeispiele erfindungsgemäßer Massenabscheider, in perspektivischer Ansicht,
Figur 2 Geschwindigkeitsprofile zwischen Mantelflächen von Ausführungsbeispielen erfindungsgemäßer Massenabscheider, in einem Querschnitt,
Figur 3a und 3b zeigt eine abwechselnd funktionalisierte Mantelfläche eines Ausführungsbeispiels eines erfindungsgemäßen Massenabscheiders, in einem Querschnitt und einer Draufsicht,
Figur 4 einen schematischen Schaltplan einer erfindungsgemäßen Massenabscheider-Anordnung, gemäß einem Ausführungsbeispiel,
Figur 5 eine erfindungsgemäße Massenabscheider-Anordnung in perspektivischer Ansicht und in einem Längsschnitt, gemäß einem Ausführungsbeispiel,
Figur 6a und 6b Ausführungsbeispiele erfindungsgemäßer Massenabscheider, einmal mit makroskopisch strukturierter Mantelfläche, einmal mit einem mikroskopisch strukturierten Einsatz, in perspektivischer Ansicht,
Figur 7a bis 7e ein Ausführungsbeispiel eines erfindungsgemäßen Massenabscheiders mit verstellbarem Strömungsquerschnitt, in perspektivischer Ansicht und in einem Längsschnitt,
Figur 8a und 8b das Ausführungsbeispiel gemäß Figur 7 mit aus der Verstellung resultierenden, unterschiedlichen Strömungsquerschnitten,
Figur 9a bis 9c ein Ausführungsbeispiel eines erfindungsgemäßen Massenabscheiders mit verstellbarem Strömungs- und Zulaufquerschnitt, in einem Detail-Längsschnitt, und
Figur 10a und 10b ein weiteres Ausführungsabeispiel einer sowohl verstellbaren als auch größenkaskadierten Massenabscheider-Anordnung.

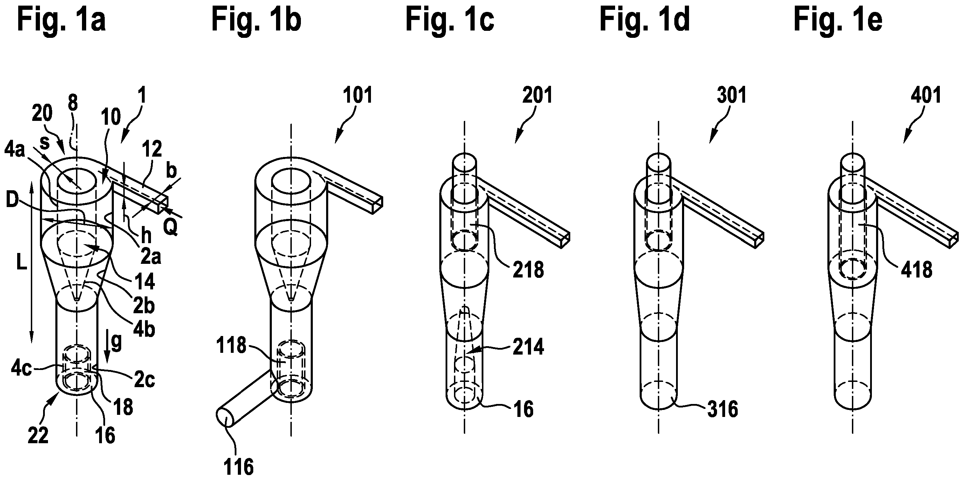

Die Figuren 1a -1e zeigen fünf Ausführungsbeispiele eines erfindungsgemäßen Massenabscheiders oder Zyklons 1; 101; 201; 301; 401 mit geometrischen Grundabmaßen. Diese sind eine Höhe oder Länge L des Zyklons 1, ein Außendurchmesser D einer radial äußeren Mantelfläche 2, ein Radialabstand s zu einer radial inneren Mantelfläche 4 und eine Höhe h und Breite b eines Druckmittelszulaufs 12.

Der jeweilige Massenabscheider 1; 101; 201; 301; 401 ist mit seiner Mittelachse 8 parallel zur Schwerkraft g ausgerichtet, wobei alternativ eine schräge oder liegende Ausrichtung möglich ist. Die Mantelflächen 2, 4 begrenzen einen Innenraum 10, der im Bereich einer Mündung eines Druckmittelzulaufs 12 ringförmig ausgestaltet ist. Über letztgenannten tritt ein Druckmittelvolumenstrom Q von mit Blasen beladenem, öligem oder organischem Druckmittel ein.

Die radial innere Mantelfläche 4 ist im Ausführungsbeipiel gemäß Figur 1a an einem Tauchkörper 14 und einem Taurohr 16 mit Abschnitten 4a, 4b, 4c verteilt ausgebildet und erstreckt sich konzentrisch oder koaxial zur radial äußeren Mantelfläche 2. Beide Mantelflächen 2, 4 haben jeweils einen zylindrischen, oberen Abschnitt 2a, 4a und einen daran ansetztenden, sich radial verjüngenden, im Ausfühjrungsbeispiel kegeligen, unteren Abschnitt 2b, 4b. Der kegelige Abschnitt 4b des Tauchkörpers 14 läuft abgerundet, spitz aus. An einem dem oberen Endabschnitt 20 des Zyklons 1 gegenüberliegenden unteren Endabschnitt 22 sind gemäß Figur 1a Abläufe 16, 18 für verschiedene Phasen vorgesehen. Aufgrund des Effektes der Massenabscheidung ist der radial äußere 16, ringförmige für das entgaste oder teilentgaste Druckmittel und der radial innere 18 für die leichtere Phase, die mit Blasen angereichert ist, vorgesehen. Die Abläufe 16, 18 sind im Ausführungsbeispiel gemäß Figur 1a koaxial. Die Ausführungsbeispiele der Figuren 1b bis 1e werden im Folgenden der Einfachheit halber lediglich bezüglich ihrer Abweichungen besprochen.

Der Massenabscheider 101 gemäß Figur 1b entspricht demjenigen gemäß Figur 1a, wobei abweichend der Ablauf 116 radial angeordnet ist. Hierfür ist das Tauchrohr 118 zudem etwas verlängert.

Der Massenabscheider 201 gemäß Figur 1c weicht von demjenigen gemäß Figur 1a ab, indem der Tauchkörper 214 und der Ablauf, beziehungsweise das Tauchrohr 218, getauscht angeordnet sind. Erstgenannter ist unten, das letzgenannte oben angeordnet. Folglich tritt die mit Blasen angereicherte Phase oben aus.

Der Massenabscheider 301 gemäß Figur 1d entspricht demjenigen gemäß Figur 1c, wobei kein Tauchkörpr vorgesehen ist.

Der Massenabscheider 401 gemäß Figur 1e entspricht demjenigen gemäß Figur 1d, wobei das Tauchrohr 418 verlängert ist.

Generell können die Mantelfläche 2, 4 mittels einer Miko- oder Nanostrukturierung funktionalisiert sein, sodass eine Benetzung mit Gas gegenüber der mit Druckmittel erhöht ist, was die Blasenabscheidung und deren Wachstum fördert. Eine ergänzende Oberflächenchemie unterstützt dies noch. Eine Makrostrukturierung kann vorgesehen sein, um die Koaleszenz und das Abschwemmen der Blasen zu verbessern.

Insbesondere bieten sich solche unterstützenden Ausbildungen bei den Varianten gemäß den Figuren 1c bis 1e an, da hier vergleichweise kleine Mantelflächen 2, 4 vorliegen.

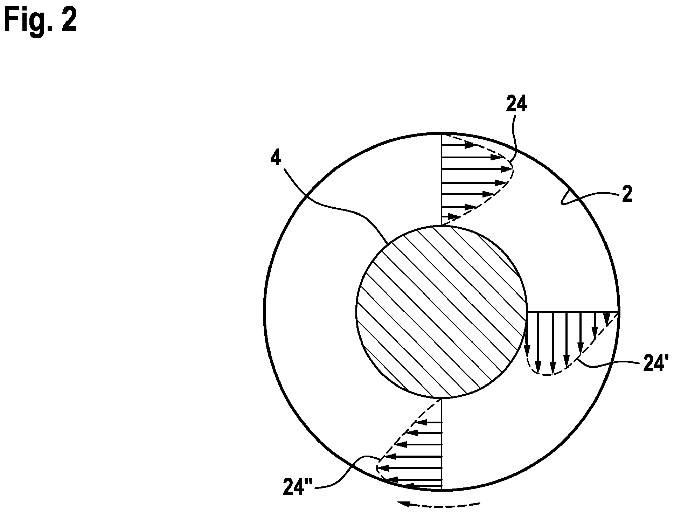

Figur 2 zeigt Geschwindigkeitsprofile von Massenabscheidern im Bereich des Ringraumes, wobei die Mantelflächen 2, 4 unterschiedlich funktionalisiert sind. Der Einfachheit halber sind die Geschwindigkeitsprofile gemeinsam in einem Schnitt senkrecht zur Mittelachse 8, gemäß Figur 1 dargestellt.

Prinzipiell gilt die Haftbedingung für das Druckmittel an den Mantelflächen 2, 4, womit die Abnahme der Geschwindigkeit des Druckmittels auf Null an den Mantelflächen 2, 4 verbunden ist. Ein solch "klassisches" Geschwindigkeitsprofil 24, dass sich bei nichtfunktionalisierten Manteflächen 2, 4 ergibt, ist in Figur 2 oben gezeigt.

Bei oleophob funktionalisieter radial innen angeordneter Mantelfläche 4 ergibt sich gemäß Figur 2 rechts an der Innenwand ein "Rutschen" des Druckmittels auf einem Gaspolster, mit Abnahme der Reibung an Innenwand. Dementsprechend ist die Geschwindigkeit des Druckmittels an der Innenwand 4 nicht null, was steilere Geschwindikeitsgradienten in radialer Richtung, beziehungsweise eine Verteilungsänderung der Geschwindigkeitsgradienten über den Querschnitt gemäß dem Beispiel-Geschwindigkeitsprofil 24' ermöglicht.

Analoges ist bei Funktionalisierung der radial außen angeordneten Mantelfläche 2 gemäß Figur 2 unten möglich, woraus das Beispiel-Geschwindigkeitsprofil 24" resultiert.

Über die individuelle Funktionalisierung kann Einfluss auf das Geschwindigkeitsprofil, den Geschwindigkeitsgradienten und somit auf den Blasentransport, auf das Überholgeschehen der Blasen und deren Kollisionshäufigkeit und Wachstum genommen werden.

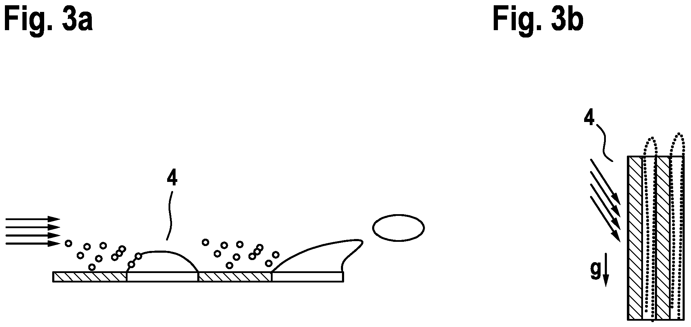

Figur 3a zeigt schematisch eine Mantelfläche 4, die abwechselnd funktionalisiert/nicht funktionalisiert ist, in einem Querschnitt. Das Prinzip ist dabei auf jede Oberfläche im Innenraum des jeweiligen Massenabscheiders anwendbar, insbesondere auch auf die Mantelfläche 2. Dabei wechseln sich mikro- oder nanostrukturierte - und somit oleophobe, beziehungsweise aerophile - Flächenabschnitte mit unstrukturierten - und damit oleophilen - Flächenabschnitte in Richtung der Druckmittelströmung ab. Dies führt im Bereich der strukturierten Flächenabschnitte zum Abscheiden der Gasblasen an der Mantelfläche 4 und zu deren Koaleszieren zu größeren Gasblasen, wohingegen im Bereich der unstrukturierten Flächenabschnitte das gezielte Abschwemmen der Blasen erfolgt, sobald diese groß genug sind. Figur 3b zeigt diesen Zusammenhang in einer Draufsicht von der Seite. Eine derart wechselnde Funktionalisierung mit Blasenakkumulation und -abschwemmung ist eine Alternative zu vollflächig funktionalisierten Mantel- oder Oberflächen.

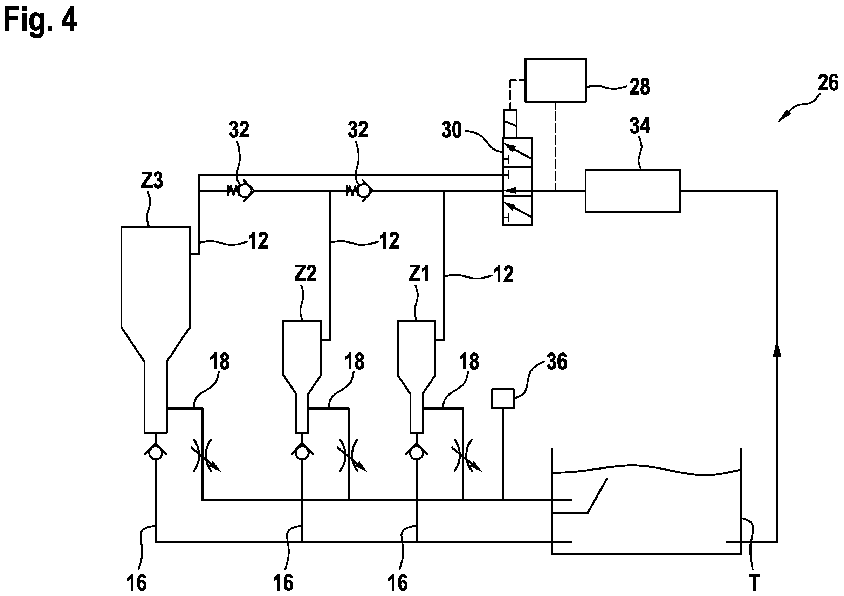

Gemäß Figur 4 ist eine Flexibilisierung der Abscheidung für verschiedenen Druckmittelvolumenströme möglich, wenn Zyklone oder Massenabscheider Z1, Z2, Z3, von denen wenigstens einer erfindungsgemäß ausgestaltet ist, zu einer Massenabscheider-Anordnung 26 hydraulisch zusammengeschaltet oder kaskadiert sind. Die hydraulische Schaltung der Zyklone Z1, Z2, Z3 ist wie gezeigt parallel und kann alternativ in Reihe oder als Mischform ausgebildet sein. Dabei sind die Zyklone Z1, Z2 gleich und auf einen geringen Nenn-Druckmittelvolumenstrom ausgelegt, der Zyklon Z3 ist mit einem doppelt so großen Nenn-Druckmittelvolumenstrom ausgelegt. Die Steuerung, welche Zyklone Z1, Z2, Z3 mit Druckmittel versorgt, also aktiviert werden, und welche nicht, erfolgt über ein von einem Strömungsschalter 28 betätigtes 3/3-Wegeschaltventil 30, in Zusammenwirken mit den in Reihe geschalteten Rückschlagventilen 32. So sind alle Zyklone Z1, Z2, Z3 einzeln oder in Kombination in Abhängigkeit des Druckmittelvolumentroms am Ventil 30 und des sich jeweils einstellenden Druckverlustes über den Zyklon Z1, Z2, Z3 mit Druckmittel versorgbar, also aktivierbar und deaktivierbar. Andere Steuerungslösungen sind natürlich möglich. Die Zyklone Z1, Z2, Z3 der Anodnung sind auf der Niederdruckseite, also im Rücklauf einer hydraulischen Komponente 34 angeordnet. Beide Phasen, also das zumindest teilentgaste Druckmittel über die Abläufe 16 und die mit Blasen oder Gas angereicherte Phase über die Abläufe 18, strömen dem Druckmittelraum eines Tanks T zu, wobei eine Sammelleitung der Abläufe 18 zuvor einen Abzweig zu einer Entlüftung 36 aufweist, über die die Blasen, beziehungsweise das Gas entweichen kann.

Die in Figur 4 gezeigte Kaskadierung von Zyklonen Z1, Z2, Z3 teils unterschiedlicher Größe, kann mit Hilfe geometrischer Ähnlichkeit und unter Ausnutzung nicht genutzten Bauraums, wie beispielsweise des Volumens des Tauchkörpers eines Zyklons, in kompakter Weise durch Schachtelung erfolgen.

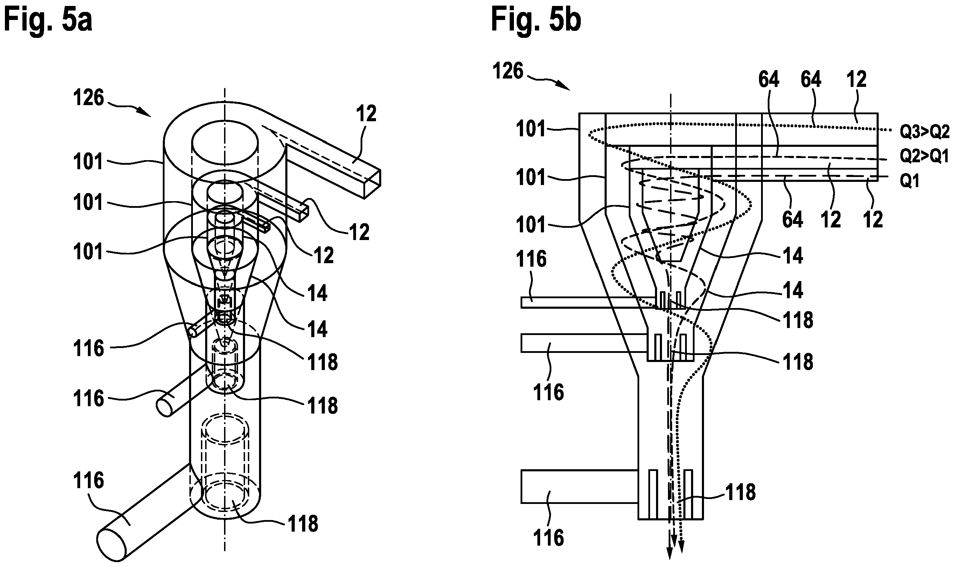

Dies verdeutlichen die Figuren 5a und 5b. Hier sind drei Zyklone 101 gemäß Figur 1b in unterschiedlicher Größe zu einer Massenabscheider-Anordnung 126 derart geschachtelt, dass die Mantelflächen 2, 4 des jeweils nächstkleineren Zyklons 101 im Tauchkörper 14 des nächstgrößeren Zyklons 101 angeordnet sind. Die Druckmittelzuläufe 12 und die Abläufe 116 sind jeweils radial, die Abläufe 118 axial ausgerichtet. Die Druckmittelströmungspfade 64 der einzelnen Zyklone 101 (gestrichelt dargestellt) können jeweils dem nächstgrößeren Zyklon zuströmen, sodass im Prinzip eine Reihenschaltung möglich ist, oder die Zyklone sind parallel geschaltet (beides nicht dargestellt).

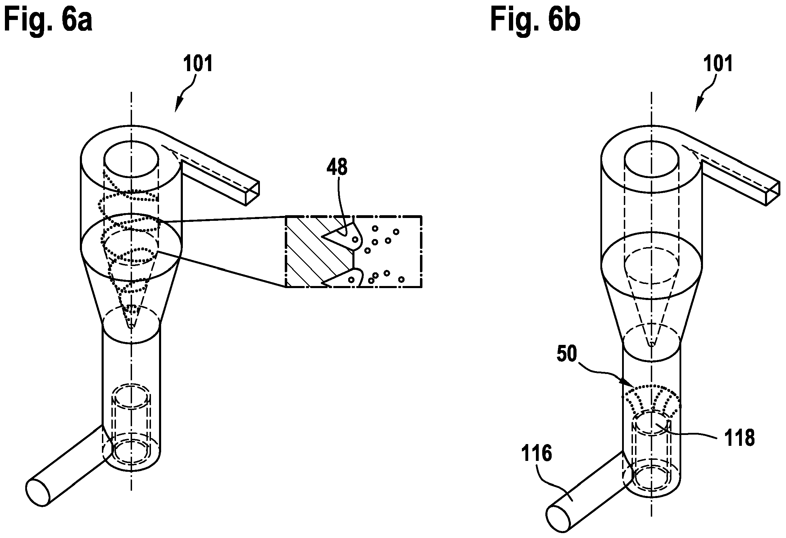

Gemäß Figur 6a ist die radial innere Mantelfläche 4 des Zyklons 101 mit Rillen 48 makrostrukturiert, die in paralleler oder senkrechter Ausrichtung zur Strömungsrichtung ausgerichtet sind und Blasen- oder Gaspolster bündeln, führen und über die größere Oberfläche zu einer Verstärkung und Konzentration der Benetzung mit Blasen oder Gas führen. Der Querschnitt der Rillen 48 kann neben dem dargestellten dreieckigen auch beliebig anders ausgeformt sein.

Figur 6b zeigt einen lösbaren Einsatz 50 im Zyklon 101, der als Netz mit mikro- oder Nanostrukturierter Oberfläche ausgeführt ist. Der Einsatz 50 ist nahe des axialen Ablaufs 118 für die mit Gas oder Blasen angereicherte, abzuscheidende Phase angeordnet. Noch nicht abgeschiedene Blasen können so an der netzartigen Struktur mit oleo- oder superoleophober Eigenschaft anhaften und nach Vergrößerung durch Koaleszenz nach innen zum Ablauf 118 abgeschieden werden. Die Position des Einsatzes 50 kann auch weiter oben, stromauf vorgesehen sein, um koaleszierten Blasen ausreichend Verweilzeit zur Abschwemmung nach radial innen zu gewähren. Eine zusätzliche Neuverdrallung der Druckmittelströmung im Zyklon 101 durch entsprechende Schaufeln kann diesen Effekt unterstützen, würde aber auch den Gesamtdruckverlust erhöhen.

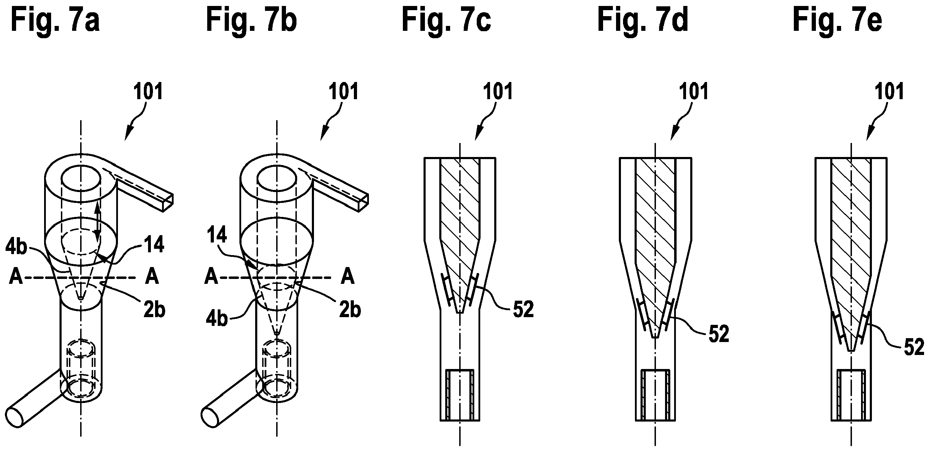

Figur 7a und 7b zeigt den Zyklon 101 mit höhensverstellbarem Tauchkörper 14 zur Geschwindigkeitserzeugung bei reduzierten Druckmittelvolumenstrom Q. Die Verstellung kann dabei elektrisch oder hydraulisch gesteuert oder geregelt werden.

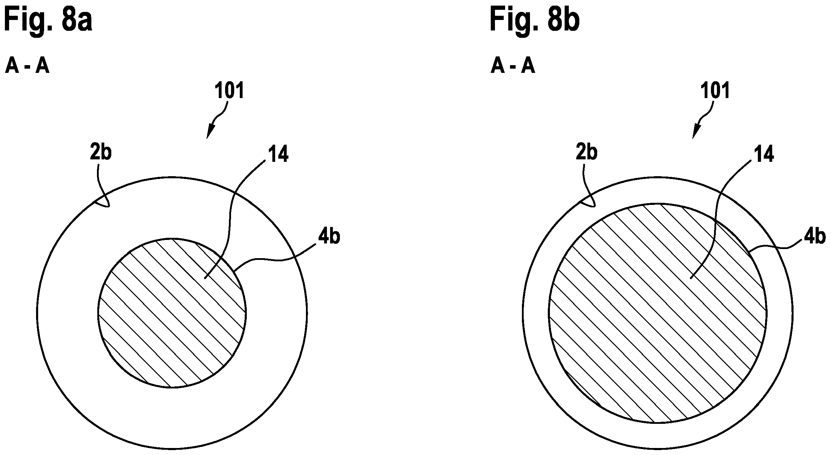

Die Figuren 8a, 8b zeigen den sich verengenden Strömungsquerschnitt auf Höhe einer Ebene A-A gemäß den Figuren 7a, 7b, wenn wie vorbeschrieben die Absenkung vom Zustand gemäß Figur 7a zum Zustand gemäß Figur 7b erfolgt.

Die Figuren 7c, 7d und 7e zeigen den Zyklon 101 gemäß Figur 7a und 7b mit am Tauchkörper 14 ergänzend angeordneter, trichterförmiger Leitstruktur 52 in drei verschiedenen Positionen des Tauchkörpers 14. Beim Absenken des Tauchkörpers 14 übernimmt die Leitstruktur 52 teilweise und am Ende des Absenkens, in der untersten Stellung des Tauchkörpers 14, vollständig die Funktion einer fortgeführten Erstreckung der radial außen angeordneten Mantelfläche 2, sodass insbesondere bei kleinen Druckmittelolumenströmen hierdurch eine fortgeführte Aussendurchmesserverkleinerung zur fortgeführten Gewährleistung ausreichender Fliehkräfte stattfindet.

Anstelle der gezeigten kegelförmigen Leitvorrichtung kann eine durch beispielsweise spiralige Schaufeln realisierte Leitvorrichtung zur (Wieder-)Erzeugung von Umfangskomponenten der Geschindigkeiten zum Einsatz kommen.

Solche Leitvorrichtungen können mehrfach gestaffelt (n-fach) in radialer Richtung, und sich über die gesamte radial innen angeordnete Mantelfläche erstreckend, angeordnet sein.

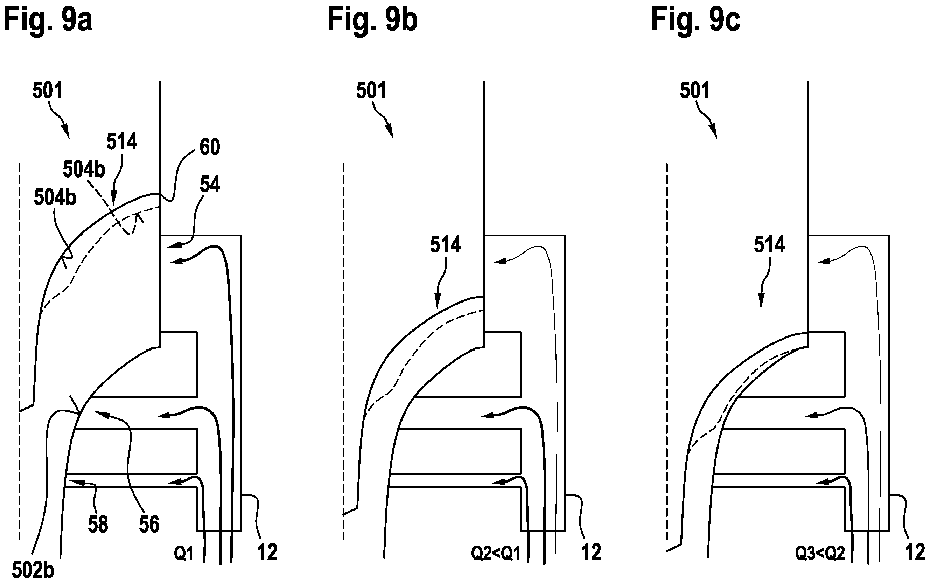

Die Figuren 9a, 9b und 9c zeigen ein Ausführungsbeispiel eines Zyklons 501 mit einem verstellbare Tauchkörper 514 und einem Druckmittelzulauf 12 mit mehreren Mündungen 54, 56, 58 in der radial außen angeordneten Mantelfläche 502. Der am Tauchkörper 514 angeordnete, sich radial verjüngende Abschnitt 504b der radial innen angeordneten Mantelfläche 504 und der gegenüberliegende, sich radial verjüngende Abschnitt 502b der radial außen angeordneten Mantelfläche 502 weisen dabei aufeinander abgestimmte Konturen auf. Der Abschnitt 504b ist konkav, der Abschnitt 502b konvex gewölbt. Alternativ ist gestrichelt eine konvex-konkav gewölbte Kontur des Abschnitts 504b dargestellt. Die Mündungen 54, 56, 58 sind auf verschiedenen Höhen und damit Aussendurchmessern angeordnet. Die Mündungen 54, 56, 58 sind dabei in ihrer Größe so gestaltet, dass sie bei gewünschten Druckverlusten nach oben hin, also bei größeren Aussendurchmessern, höhere Druckmittelvolumenströme zulassen. Der maximale Druckmittelvolumenstrom Q1 ist ermöglicht, wenn gemäß Figur 9a die Zulaufquerschnitte der Mündungen 54, 56, 58 maximal aufgesteurt sind. Bei kleineren Volumenströmen Q2 und Q3 erfolgt eine Herunterfahren des Tauchkörpers, und damit die vorbeschriebene Strömungsquerschnittverengung. Zudem weist der Tauchkörper 514 eine Steuerkante 60 auf, die die Mündung 54 abschnittsweise (Fig. 9b) oder ganz (Fig. 9c) zusteuern kann. Über die somit mit der Absenkung des Tauchkörpers 514 verbundene, zunehmende Zusteuerung der Mündung 54 und die Strömungsquerschnittsverengung wird der Druckmittelvolumenstrom des Druckmittelzulaufs 12 zunehmend in Bereiche kleinerer Außendurchmesser verlegt, das heißt in den Figuren 9a, b, c nach unten, sodass der Zyklon 501 selbst bei geringerem Druckmittelvolumenstrom noch effizient betrieben werden kann.

Die Konturen können zumindest abschnittsweise formschlüssig sein, sodass durch ihre Anlage der dortige Strömungsquerschnitt gesperrt und bei einer Annäherung der Konturen gleichförmig zusteuerbar ist.

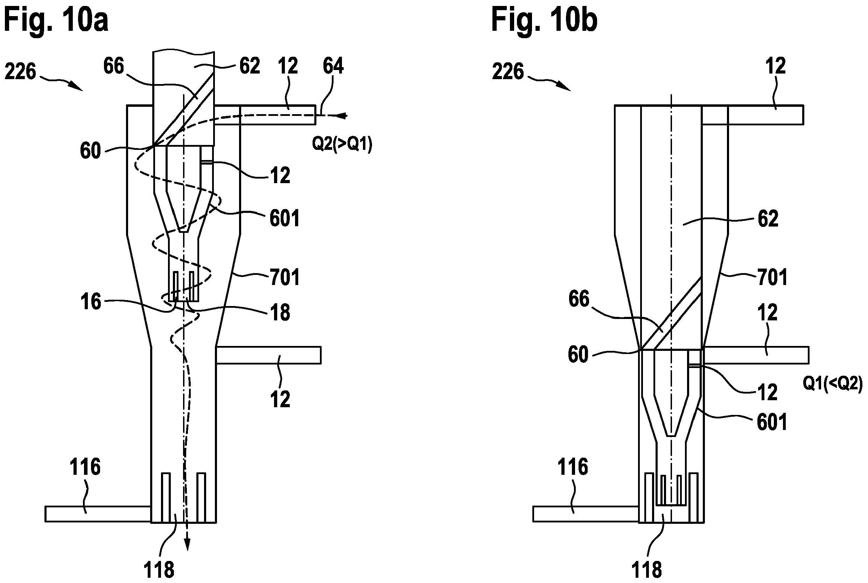

Figur 10a und 10b zeigen ein Ausführungsbeispiel einer Massenabscheider-Anordnung 226, die eine Kombination aus Kaskadierung und Verstellung aufweist. Die geometrieähnliche Innenkontur des großen Zyklon 701 beherbergt einen kleinen Zyklon 601 mit geometrieähnlicher Außenkontur. Letztgenannter ist an einem Endabschnitt eines axial-beweglichen Schiebers 62, ähnlich dem eines Wege- oder Sitzventils, angeordnet. Eine Verstellung des Schiebers 62, und somit die Verstellung einer Position des damit verbundenen kleinen Zyklons 601, kann in Abhängigkeit eines Betriebpunktes, insbesondere wenigstens einer erfassten oder abgegriffenen Betriebgröße, gesteuert oder geregelt sein. Hierbei kann auf aus der Hydraulik bekannte Konzepte, insbesondere rein hydraulische ohne Hilfsenergie oder elektrifizierte mit Hilfsenenergie, zurückgegiffen werden. Der innere, kleine Zyklon 601 hat einen festen Druckmittelzulauf 12 und einen festen Druckmittelablauf 16, die sich bei Verstellung mitbewegen.

In einer Ausgangsstellung gemäß Figur 10a ist der Druckmittelzulauf 12 des kleinen Zyklons 601 zwar über den oberen Druckmittelzulauf 12 des großen Zyklons 701 fluidisch anströmbar, aber der große Druckmittelvolumenstrom Q2 passiert im Wesentlichen nur den Ring- und Innenraum des großen Zyklons 701, da dieser Druckmittelströmungspfad 64 den geringsten Strömungswiederstand aufweist.

Bei reduziertem Druckmittelvolumenstrom Q1 wird der Schieber 62 abgesenkt. Hierbei kommt es zu einer Verlagerung des Zustroms auf den unteren Druckmittelzulauf 12 des großen Zyklons 701, da eine Steuerkante 60 am Schieber 62 mit dem Absenken den Strömungsquerschnitt des Druckmittelströmungspfades 64 zunehmend verengt. So kommt es zunehmend zur Verlagerung der Druckmittelbeaufschlagung hin zum unteren Druckmittelzulauf 12 des großen Zyklons 701.

Ergänzend weist der Schieber 62 des Ausführungsbeispiels eine Verbindungsbohrung 66 auf, über die der obere Druckmittelzulauf 12 des großen Zyklons 701 mit dem Ringraum unterhalb der Steuerkante 60, selbst dann fluidisch verbunden ist, wenn die Steuerkante 60 an der radial außen angeordneten Mantelfläche 2 des großen Zyklons 701 aufsitzt (vgl. Fig 10b).

Wie bereits erwähnt, hängt die radiale Abscheidegeschwindigkeit der Blase senkrecht zur Mittelachse 8 gemäß Figur 1a neben den geometrischen Grundabmaßen D, L, s vom Druckmittelvolumenstrom Q ab. Der gewünschte Abscheidungseffekt entsteht erst ab einem Schwell-Druckmittelvolumenstrom Qmin und nimmt bei höheren Werten von Q immer weiter zu. Da mit höherem Q aber auch der Druckverlust dp ansteigt, gibt es auch einen Schwellvolumenstrom Qmax, der aus Gründen des Energieverbrauchs nicht überschritten werden soll. Die gleiche Betrachtung gilt prinzipiell auch für Massenabscheider-Anordnungen.

Jeder der gezeigten Zyklone, aber auch jede der gezeigten Anordnungen, sollte daher sinnvoll mit Qmin < Q < Qmax betrieben werden oder eine wir zuvor beschriebene Verstellbarkeit (vgl. Fig. 7, 8, 9) oder Schaltbarkeit oder Kaskadierung (vgl. Fig. 4, 5) aufweisen, um nicht auf ein starres Intervall [Qmin, Qmax] eingeschränkt zu sein.

Ein Rechenbeispiel für eine Massenabscheider-Anordnung mit Betriebspunktanpassung durch variable Verschaltung von vier Zyklonen, die über eine hydraulische Logik, Elektronik oder dergleichen angesteuert werden ist:
Zyklon 1: Qmin = 10 l/min; Qmax = 20 l/min
Zyklon 2: Qmin = 10 l/min; Qmax = 20 l/min
Zyklon 3: Qmin = 40 l/min; Qmax = 50 l/min
Zyklon 4: Qmin = 90 l/min; Qmax = 100 l/min

Ab 10 l/min wird Zyklon 1 aktiviert und bis zu 15 l/min optimal betrieben. Über 20 l/min wird aufgrund steigenden Druckverlustes dp der parallel geschaltete Zyklon 2 zugeschaltet, mit einer Aufteilung der Druckmittelvolumenströme (z.B. mittels Stromteiler). Zyklon 1 und Zyklon 2 können bei gleichem Grenz-Druckverlust zusammen bis 40 l/min betrieben werden. Dann wird auf Zyklon 3 umgeschaltet, bis 50 l/min erreicht sind. Dann wird Zyklon 3 zusammen mit Zyklon 1 bis 70 l/min betrieben. Darüber hinaus werden die Zyklone 1, 2 und 3 bis 90 l/min betrieben, bis auf Zyklon 4 umgeschaltet wird.

Im diesem Beispiel ließe sich mit den vier beispielhaften Zyklonen (mit jeweils 10 l/min großem Volumenstrom-Intervall) ein Gesamtintervall von 10-190 l/min abdecken mit entsprechender Erweiterungsmöglichkeit durch weitere Komponenten (Zyklon 5 mit 190-200 l/min ergäbe zusammen bis 390 l/min, usw.).

Die beschriebene Kaskadierung der Zyklone stellt in der Ausführung ein Beispiel dar, dass auch in beliebigen anderen Staffelungen und Kombinationen erfolgen kann und kann u.a. als hydraulische Logik mit Druckbegrenzungsventilen, Stromteilern, Strömungsschalter etc. oder als elektronisch geregelte Variante umgesetzt werden. Ausführungsbeispiele sind unter anderem in der bereits besprochenen Figuren 4 und 5 erläutert.

Alternativ oder ergänzend zur Kaskadierung kann jeder einzelne Zyklon zur Betriebspunktanpassung wie anhand der Figuren 7, 8, 9 individuell verstellbar ausgestaltet sein. Die Betriebspunktanpassung kann auf Ebene des einzelnen Zyklons über einen variablen Innendurchmesser oder Außendurchmesser erfolgen. Hierbei können jeweils Wirkungsgradverluste auftreten. Diese Maßnahme kann natürlich auch in Kombination mit der oben genannten Kaskadierung Anwendung finden.

Über die oben beschriebene axiale Verstellung der radial innen angeordenetn Mantelfläche mit variablem Durchmesser, wird vor allem der Effekt erzielt, dass eine Vergrößerung/Verkleinerung der durchströmbaren Querschnittsfläche zu einer Verkleinerung/Vergrößerung der Durchströmungsgeschwindgkeit führt und damit die resultierenden Zentrifugalkräfte auf die Blasen eingestellt werden können.

Die Lagerung der verstellbaren Mantelfläche oder des verstellbaren Mantelflächenabschitts kann dabei ähnlich wie bei hydraulischen Schieberventilen durch Gleiten auf Ölfilm und ggf. durch Entlastungsrillen erfolgen.

Es sind alternativ nichtlineare Konturen der Matelflächen, insbesondere logarithmische Konturen, die sich mathematisch aus Kräftegleichgewichtsbetrachtungen ergeben, möglich.

Offenbart ist ein Massenabscheider zum Abscheiden von Blasen aus öligem oder organischem, hydraulischem Druckmittel, mit einem Ringraum, dessen Mantelflächen derart beabstandet und gekrümmt sind, dass ein resultierendes Geschwindigkeitsprofil und/oder eine resultierende Turbulenz des mit Blasen beladenen Druckmittels eine Blasenkollision und/oder Blasenwachstum begünstigt oder begünstigen.

Offenbart ist zudem eine Massenabscheider-Anordnung mit mehreren derartigen Massenabscheidern, die insbesondere in Abhängigkeit einer Betriebsgröße selektiv aktivierbar und/oder deaktivierbar sind.

## Patentansprüche

1. Massenabscheider zum Abscheiden von Blasen aus öligem oder organischem, hydraulischem Druckmittel, mit einem von wenigstens einem Druckmittelzulauf (12) in Richtung von Abläufen (16, 18; 116, 118; 16, 218; 316, 218) des Massenabscheiders (1; 101; 201; 301; 401; 501; 601; 701; Z1, Z2, Z3) ausbildbaren Druckmittelströmungspfad (64), der von einer radial außen angeordneten Mantelfläche (2) gekrümmt ist, **dadurch gekennzeichnet, dass** eine radial innen angeordnete Mantelfläche (4) vorgesehen ist, und dass sich der Druckmittelströmungspfad (64) zumindest abschnittsweise zwischen den Mantelflächen erstreckt.

2. Massenabscheider nach Anspruch 1, der in Abhängigkeit eines Nenn-Druckmittelvolumenstroms und eines Nenn-Blasendurchmessers geometrisch derart ausgestaltet ist, dass eine Zentripetalkraft der Blase mit einer Widerstandskraft der Blase im Gleichgewicht ist und eine Abscheidegeschwindigkeit der Blase in radialer Richtung groß genug ist, um während einer Blasenlaufzeit im Massenabscheider (1; 101; 201; 301; 401; 501; 601; 701; Z1, Z2, Z3) einen Abstand von der radial außen zur radial innen angeordneten Mantelfläche (2, 4) zurückzulegen.

3. Massenabscheider nach Anspruch 1 oder 2, wobei wenigstens eine der Mantelflächen (4) und/oder eine zulauf- oder ablaufseitige Oberfläche zumindest abschnittsweise derart mikro- oder nanoskalig strukturiert ist, dass an ihr eine Benetzung mit Gas gegenüber einer Benetzung mit dem Druckmittel erhöht ist.

4. Massenabscheider nach Anspruch 3, wobei die radial innen angeordnete Mantelfläche (4) derart mikro- oder nanoskalig strukturiert ist und die radial außen angeordnete Mantelfläche (2) nicht.

5. Massenabscheider nach einem der vorhergehenden Ansprüche, wobei wenigstens eine der Mantelflächen (4) zumindest abschnittsweise derart makroskalig strukturiert (48) ist, dass daran die Blasen sammel- und/oder koaleszierbar sind.

6. Massenabscheider nach einem der vorhergehenden Ansprüche, wobei wenigstens eine der Mantelflächen um die andere rotierbar ausgebildet ist.

7. Massenabscheider nach einem der vorhergehenden Ansprüche, wobei sich die Mantelflächen (2, 4) um eine Mittelachse (8) erstrecken und der Druckmittelzulauf (12) an einem Endabschnitt der Längsachse (8) angeordnet ist.

8. Massenabscheider nach einem der vorhergehenden Ansprüche, wobei einer der Abläufe (18; 118; 218; 418) für Blasen oder deren Gas und ein anderer der Abläufe (16; 116; 316) für zumindest teilentgastes Druckmittel vorgesehen ist.

9. Massenabscheider nach Anspruch 8, wobei der eine der Abläufe (18; 118; 218; 418) von einem Tauchrohr gebildet ist, an dem außenumfänglich die radial innen angeordnete Mantelfläche, oder zumindest ein Abschnitt (4c) davon, ausgebildet ist.

10. Massenabscheider nach einem der vorhergehenden Ansprüche mit einem Tauchkörper (14; 214), an dem außenumfänglich die radial innen angeordnete Mantelfläche, oder zumindest ein Abschnitt (4a, 4b) davon, ausgebildet ist.

11. Massenabscheider nach Anspruch 9 und 11, wobei das Tauchrohr (18; 118; 218) und der Tauchkörper (14; 214) einander gegenüber angeordnet sind.

12. Massenabscheider nach einem der vorhergehenden Ansprüche, wobei von den Mantelflächen, oder zumindest von Abschnitten (2b, 4b) der Mantelflächen, ein Strömungsquerschnitt verstellbar begrenzt ist.

13. Massenabscheider nach einem der vorhergehenden Ansprüche, wobei von den Mantelflächen, oder zumindest von Abschnitten (502b, 504b) der Mantelflächen, ein Zulaufquerschnitt verstellbar begrenzt ist.

14. Massenabscheider nach Anspruch 13, wobei der Zulaufquerschnitt auf in Verstellrichtung aufeinanderfolgende Zulaufmündungen (54, 56, 58) des wenigstens einen Druckmittelzulaufs (12) in der radial außen angeordneten Mantelfläche (502b) verteilt ist, und die radial innen angeordnete Mantelfläche (504b) eine Steuerkante (60) hat, von der wenigstens eine der Zulaufmündungen (54) zumindest abschnittsweise zusteuerbar ist.

15. Massenabscheider-Anordnung mit wenigstens zwei fluidisch verbindbaren Massenabscheidern (Z1, Z2, Z3; 101; 601, 701), die gemäß einem der vorhergehenden Ansprüche ausgestaltet sind.

16. Anordnung nach Anspruch 15, wobei die Massenabscheider (Z1, Z2, Z3; 101; 601, 701) fluidisch parallel oder in Reihe schaltbar sind.

17. Anordnung nach Anspruch 15 oder 16, wobei die Massenabscheider (101; 601, 701) ineinander verschachtelt angeordnet sind.

18. Anordnung nach Anspruch 17 mit Massenabscheidern (101; 601, 701) nach Anspruch 10, wobei im Tauchkörper (14) eines der Massenabscheider (101; 701) zumindest die Mantelflächen eines nächstkleineren der Massenabscheider (101; 601) angeordnet sind.

19. Anordnung nach Anspruch 18, wobei der Tauchkörper des einen Massenabscheiders (701), in dem zumindest die Mantelflächen des nächstkleineren der Massenabscheider (601) angeordnet sind, verstellbar angeordnet ist, sodass über seine Verstellung ein Zulaufquerschnitt und/oder ein Strömungsquerschnitt verstellbar ist.

20. Anordnung nach einem der Ansprüche 15 bis 19, wobei wenigstens einer der Massenabscheider (Z1, Z2, Z3; 101; 601, 701) in Abhängigkeit eines Druckverlustes über den oder die Massenabscheider oder in Abhängigkeit eines Druckmittelvolumenstromes oder einer anderen Betriebsgröße der Anordnung aktivierbar, deaktivierbar, fluidisch verbindbar und/oder fluidisch trennbar ist.
